# EUROPEAN PATENT SPECIFICATION

(11) **EP 0 524 787 B1**
(45) Date of publication and mention of the grant of the patent: **20.09.2000**
(21) Application number: 92306613.8
(22) Date of filing: 20.07.1992
(51) Int. Cl.: G06K 15/12, G06K 15/00

(54) **Image output device with selective resolution enhancement**
Bildwiedergabevorrichtung mit selektiver Auflöseerhöhung
Dispositif de reproduction d'image à amélioration sélective de la résolution

(30) Priority: 25.07.1991 JP 21026891
(43) Date of publication of application: 27.01.1993
(73) Proprietor: BROTHER KOGYO KABUSHIKI KAISHA, Nagoya-shi, Aichi-ken 467 (JP)
(72) Inventor: Kobayakawa, Koji, Brother Kogyo, Nagoya-shi, Aichi-ken (JP); Kokubo, Masatoshi, Brother Kogyo, Nagoya-shi, Aichi-ken (JP)
(74) Representative: Senior, Alan Murray

(56) References cited:
- EP-A- 0 388 160
- EP-A- 0 488 534
- WO-A-88/06768
- JP-A- 2 155 769
- JP-A- 61 243 327
- US-A- 4 847 641
- US-A- 4 878 126
- US-A- 5 029 108
- PATENT ABSTRACTS OF JAPAN vol. 14, no. 464 (M-1033) 9 October 1990 & JP-A-2 185 464 (CANON KK.)

## Description

This invention relates to an image output device equipped with resolution-enhancement processing for enhancing print quality or display quality, and more particularly may be used in an image output device for discriminating character data and image data of input data which is input from an external device, and for selectively subjecting only the character data to a resolution enhancement processing while subjecting no image data to the resolution enhancement processing.

Recently, an image output device such as a laser printer for printing characters and images on a print sheet with a laser beam has been rapidly propagated in connection with development of a semiconductor technique, so that requirements such as miniaturization and low cost of the device can be achieved. In order to perform a printing operation of characters such as letters and symbols with the laser printer, the characters have been previously stored as bit image data or outline data, and a laser diode serving as a light emitting element for a semiconductor laser is driven on the basis of each dot data of the bit image data to print various characters on the print sheet.

Particularly, in order to print the outline of a character more sharply, it is proposed that the number of dots constituting the bit image data of the character should be increased to increase the resolution of the laser printer in correspondence to the increase of the number of dots. However, this proposal has a disadvantage that the cost of the laser printer rises due to the increase in capacity of a bit image storing memory caused by the expansion of the bit image data and due to complication of a printing mechanism.

One problem of high resolution text data, which is considered in JP-A-2185464, is how to print such data with low resolution image data. According to JP-A-2185465, character patterns are developed on a bit map memory while the image data is first interpolated and then also developed on the bit map memory with the same dot density.

Another problem arises from the fact that, to minimize memory usage, different fonts use different dot densities.

In this regard, EP-A-0388160 discloses an apparatus in which the printing dot density is changed to the dot density corresponding to the control program such that on a page or job unit basis, characters of different fonts, such as English and Japanese, can be printed at the optimum printing dot densities.

In order to overcome the above disadvantages, there have also been proposed various resolution enhancing techniques in which the outline of a character is smoothed in consideration of the arrangement of each dot data represented by "1" or "0" on the basis of the bit image data to enhance the resolution of the printed character.

One of the above resolution enhancing techniques is disclosed in detail in U.S. Patent No. 4,847,641 and U.S. Patent No. 5,005,139 (corresponding to Japanese Laid-open Patent Application No. 2-112966). These patents disclose an image output device in which the resolution can be more greatly enhanced in the following manner. The bit image data is developed on a bit image memory, and some dot data (bit patterns) sampled through a sample window having a predetermined shape from the bit image data subjected to a matching operation with plural pattern matching templates. If each of the sampled dot data is matched with at least one of plural kinds of pattern matching templates which have been previously stored, the dot data is subjected to a cut-off modification or a fill-in modification on the basis of the dot data of the matched template, and then modulation frequencies of the modified dot data are altered to change a dot density of a laser beam in a main scanning direction, thereby enhancing the resolution more greatly.

Various input data such as character data including letter and symbol data and graphic data is input to the laser printer from the external device. The graphic data frequently includes image data which has been subjected to an area gradation processing (gradation processing) in accordance with the dot arrangement of white and black dots on a predetermined area, such as photographic data comprising white and black mesh points.

In the image output device as disclosed in U.S. Patent Nos. 4,847,641 and 5,005,139 (corresponding to Japanese Laid-open Patent Application No. 2-112966), input data which is input from the external device and includes a mixture of character data and graphic data is developed into bit image data on the bit image memory, and then all of the bit image data stored in the memory is subjected to the resolution enhancement processing. Therefore, the resolution for the character data is enhanced and the outline of a character represented by the character data becomes sharper. However, the image data such as the graphic data which has been subjected to the gradation processing is unnecessarily subjected to the resolution enhancement processing such as the dot data cut-off modification or fill-in modification, so that the gradation of the image data to be originally represented is lost and thus the print result of the image data has an unnatural appearance. Therefore, this technique has a disadvantage that the image quality of an image such as a photograph is degraded. With regard to the discrimination of character and image data WO 88/06768 already discloses the use of commands having header portion for invoking specific image processing and a data portion. In response to an image command an incoming bit-mapped image is stored in a first portion of a memory and in response to a text command textual data is stored in a second portion of a memory.

An aim of this invention is to provide an image output device in which character data can be printed with enhanced resolution, and an image which has been subjected to a gradation processing can be printed while its original image quality is maintained.

According to the present invention there is provided an image output device according to claim 1, 4 or 5.

Preferably, the image output devices further may comprise : the features according to claims 2, 3, 6 - 8. Claim 9 contains a laser printer according to the invention.

Thus, in the image output device or a first aspect, the data converting means serves to convert the input data supplied from the interface means to the bit image data, and the separating means serves to receive the input data from the interface means and separate the input data into both of the ordinary data which is to be subjected to the resolution enhancement processing and the specific data which is not to be subjected to the resolution enhancement processing. The first storing means serves to receive the bit image data from the data converting means and store only the bit image data of the ordinary data on output-unit basis on the basis of the separation result of the separating means. On the other hand, the second storing means serves to receive the bit image data from the data converting means and store only the bit image data of the specific data on every output unit which corresponds to or is synchronized with the output unit of the ordinary data on the basis of the separation result of the separating means. The resolution-enhancement processing means serves to subject the bit image data stored in the first storing means to the resolution enhancement processing. The data synthesizing means serves to synthesize the serial bit image data supplied from the first storing means, which has been subjected to the resolution enhancement processing, with serial bit image data supplied from the second storing means while synchronizing both of the serial bit image data with each other and to output the synthesized result to the output means. As a result, the output means receives the synthesized bit image data and prints the synthesized bit image data on a print medium while preventing subjection of the specific data to the resolution enhancement processing.

In the image output device of a second aspect, the data converting means serves to convert the input data supplied from the interface means to the bit image data, and the storing means serves to store the bit image data from the data converting means on output-unit basis. On the other hand, the judging means serves to receive the input data from the interface means and judges whether input data of each output unit includes specific data which is not required to be subjected to the resolution enhancement, processing. The resolution-enhancement processing means serves to subject the bit image data from the storing means to the resolution enhancement processing, and the output means serves to receive the serial image data from the resolution-enhancement processing means and outputs it to the output medium. At this time, if the judging means judges that the input data includes the specific data, the data transfer means serves to directly supply the serial bit image data from the storing means to the output means without passing it through the resolution-enhancement processing means, so that the specific data is output while subjected to no resolution enhancement processing.

In the image output device of a third aspect, the area detecting means serves to detect an area of the storing means on which the bit image data corresponding to the specific data is stored if the judging means judges the inclusion of the specific data. The data transfer means serves to directly supply the bit image data corresponding to the specific data from the storing means to the output means without passing it through the resolution-enhancement processing means on the basis of the area information of the bit image data corresponding to the specific data which is supplied from the area detecting means, so that the specific data is output while subjected to no resolution enhancement processing.

According to the image output device of the first aspect, the separating means, the first storing mens, the second storing means and the data synthesizing means are equipped in the device, and the resolution enhancement processing is conducted only on the bit image data of the ordinary data stored in the first storing means and is not conducted on the bit image data of the specific data stored in the second storing means. Therefore, the ordinary data is output with its resolution being enhanced, and the specific data is output with no alteration or enhancement of the resolution. For example, when the ordinary data is character data, and the specific data is image data such .as photographic data which has been subjected to the gradation processing, the character data is subjected to the resolution enhancement processing, and then is output with enhanced resolution. On the other hand, the image which has been subjected to the gradation processing is output with no alteration of its gradation to be originally represented,and thus with its image quality thereof being maintained.

According to the image output device of the second aspect, the judging means and the data transfer means are equipped in the device, and if input data of an output unit includes the specific data which is not required to be subjected to the resolution enhancement processing, the input data of the output unit is not subjected to the resolution enhancement processing. Therefore, the specific data included in the input data of the output unit can be output with no alteration. In addition, input data of an output unit which includes no specific data is subjected to the resolution enhancement processing, so that the input data can be output with enhanced resolution. For example, when the specific data is image data such as photographic data which has been subjected to the gradation processing, and the input data other than the specific data is character data, an image which has been subjected to the gradation processing can be output with no alteration of its gradation to be originally represented, so that the image quality thereof can be surely maintained. Further, characters containing no image can be output with enhanced resolution for every output unit, for example every page, through the resolution enhancement processing.

In the image output device of the third aspect, the judging means, the area detecting means and the data transfer means are equipped in the device, and on the basis of the area information, the resolution enhancement processing is not conducted on the bit image data of the specific data while the resolution enhancement processing is conducted on the bit image data of the input data other than the specific data. For example, when the specific data is image data such as photographic data which has been subjected to the gradation processing, and the input data other than the specific data is character data, character data is subjected to the resolution enhancement processing and then output with enhanced resolution. In addition, images which have been subjected to the gradation processing are output without altering their gradation to be originally represented, so that the image quality thereof can be surely maintained.

The invention will be further described herein with reference to the following description of exemplary embodiments and the accompanying figures, in which:
Fig. 1 is a perspective view of a laser scanner mechanism for a laser printer;
Fig. 2 is a block diagram showing a control system for the laser printer;
Figs. 3A and 3B illustrate a flowchart for a control routine for forming output data in a first embodiment;
Figs. 4A and 4B illustrate a flowchart for a control routine for forming output data in a second embodiment;
Figs. 5A and 5B illustrate a flowchart for a control routine for forming output data in a third embodiment;
Fig. 6A is an explanatory diagram showing a character data format; and
Fig. 6B is an explanatory diagram showing an image data format.

A first embodiment of an image output device according to this invention will be described with reference to the accompanying drawings.

The first embodiment pertains to a case where this invention is applied to a laser printer for performing a printing operation of input data which is transmitted from an external device such as a personal computer, a work station or the like.

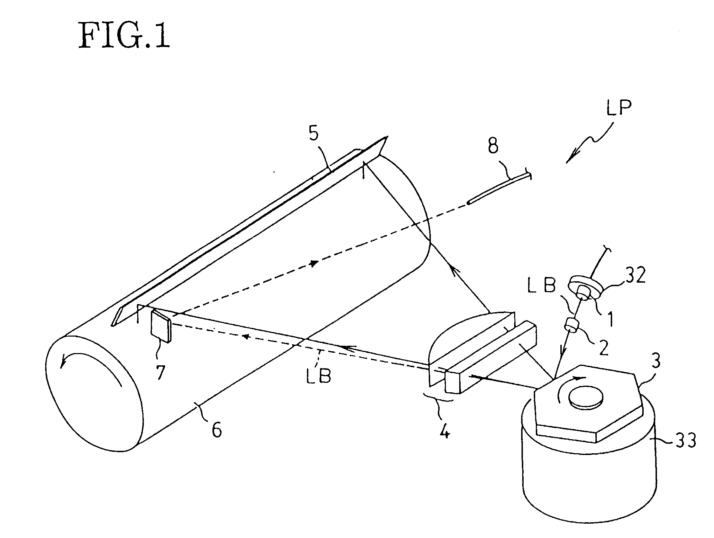

Prior to the description of the image output device of this embodiment, a laser printer LP used in this embodiment will be first described. The laser printer LP has substantially the same construction as an ordinary laser printer, and thus only a laser scanner mechanism which is a main part of the laser printer LP will be briefly described with reference to Fig. 1.

As shown in Fig. 1, a laser beam LB is emitted from a laser diode 32 in accordance with a laser driving signal which is generated in a DC controller 12 as described later, and is collimated by a collimator lens 1. The collimated laser beam LB is passed through a cylindrical lens and focused onto a polygon mirror 3 which is rotated at a constant high speed by a scanner motor 33. The laser beam LB is deflected by a predetermined angle on each mirror surface of the polygon mirror 3, corrected by a fθ lens, and then reflected from a reflection mirror 5 to the surface of a photosensitive drum 6. The photosensitive drum 6 rotates at a predetermined speed, and thus the reflected laser beam LB from the reflection mirror 5 is swept in a main scanning direction on the surface of the photosensitive drum 6 to thereby form a latent image on the photosensitive drum 6. In this case, a part of the laser beam LB which is emitted at the scan starting time for each scanning operation as indicated by a chain line is reflected from a beam detection mirror 7 through an optical fiber 8 to the DC controller 12 to be converted to a horizontal synchronizing signal with which the output of a laser driving signal is started.

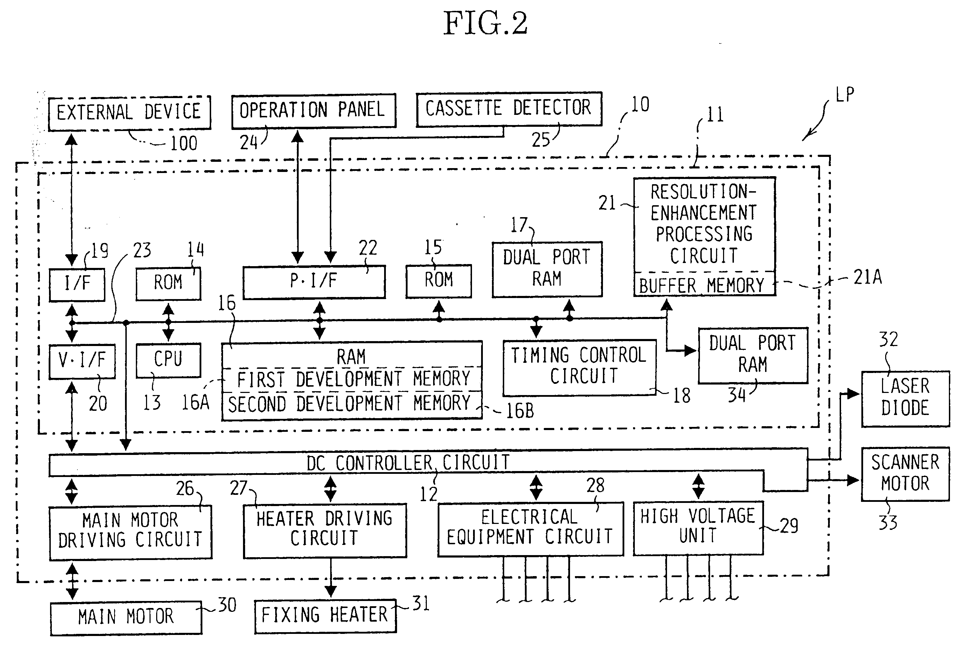

Next, a control system for the laser printer LP will be described with reference to the block diagram of Fig. 2. The control system used in the first embodiment has substantially the same construction as that of the ordinary laser printer, and thus it will be briefly described.

A control unit 10 for the laser printer LP is equipped with a video controller 11 and the DC controller 12. The video controller 11 includes a CPU 13, a ROM 14 for storing a print control program, an output data forming a control program as described later and other various control programs, a ROM 15 for storing outline data for defining outlines of many characters such as letters and symbols, a RAM 16 having a reception data buffer for storing a predetermined amount of input data transmitted from the external device, a first development memory 16A for storing bit image data of character data (ordinary data) for each page, and a second development memory 16B for storing bit image data of image data (specific data) for each page which corresponds to or is synchronized with the page of the ordinary data, dual port RAMs (FIFO memory) 17 and 34 for converting parallel data to serial data, a timing control circuit 18 for generating a timing signal when data is written in and read out of the RAM 16, a serial interface (I/F) 19 for receiving input data such as character data and image data transmitted from an external device 100, a video interface (V·I/F) 20 having two scan buffers for successively outputting to the DC controller 12 print information which has been converted to dot data, a resolution-enhancement processing circuit 21 for subjecting the bit image data for characters to resolution enhancement processing to clarify the outlines of the characters such as letters and symbols, and a panel interface (P·I/F) 22 for receiving signals from both an operation panel 24 and a cassette detector 25 for detecting the kind of a sheet cassette, these elements being connected to one another through a bus 23 such as a data bus. The resolution-enhancement processing circuit 21 is equipped with a buffer memory 21A for storing bit image data for plural lines of the bit image data stored in the first development memory 16A. The resolution-enhancement processing circuit 21 is similar to a processing circuit as disclosed, for example, in U.S. Patent Nos. 4,847,641 and 5,005,139 (corresponding to Japanese Laid-open Patent Application No. 2-112966), and is comprised of a hard logic circuit equipped with a RAM chip, a data latch circuit, etc. Therefore, of the bit image data for plural lines, bit data corresponding to a window having a predetermined shape is successively compared with each of plural kinds of pattern matching templates, and the size and the division number are determined for some bit data contained in the window which should be corrected. On the basis of the result, the frequency of a laser driving signal corresponding to the bit data to be corrected is modulated to enhance the resolution of the bit image of the character. In this embodiment, the pulse width of the laser driving signal is varied. These plural templates are stored in the ROM 14.

Since the resolution enhancement processing is carried out after bit image data for plural lines is accumulated in the resolution-enhancement processing circuit 21, a timing at which the data is output from the resolution-enhancement processing circuit 21 is delayed with respect to a timing at which the data is input to the resolution-enhancement processing circuit 21. In addition, since each of the dual port RAMs 17 and 34 comprises a first-in first-out memory (FIFO memory), there occurs a delay from the time when data is input to the RAMs 17 and 34 until the time when the data is output therefrom. Accordingly, the RAM 34 is particularly used to synchronize both bit image data, one of which has been subjected to the resolution enhancement processing and the other of which has not been subjected to the resolution enhancement processing, in a synchronizing operation using the delay.

Within the control unit 10, the controller circuit 12 is connected to a main motor driving circuit 26 for a main motor 30, a heater driving circuit 27 for a fixing heater 31, an electrical equipment circuit 28 and a high voltage unit 29 for supplying a high voltage. In addition, the DC controller circuit 12 is connected to the laser diode 32 serving as the light emitting element for the semiconductor laser and to a scanner motor 33 for rotatably driving the polygon mirror 3.

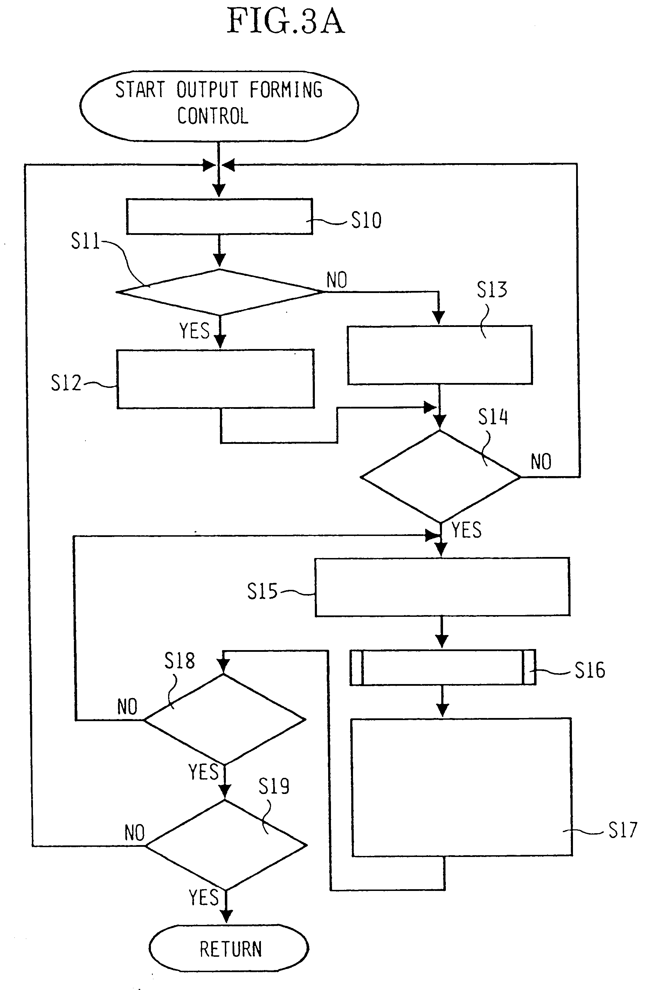

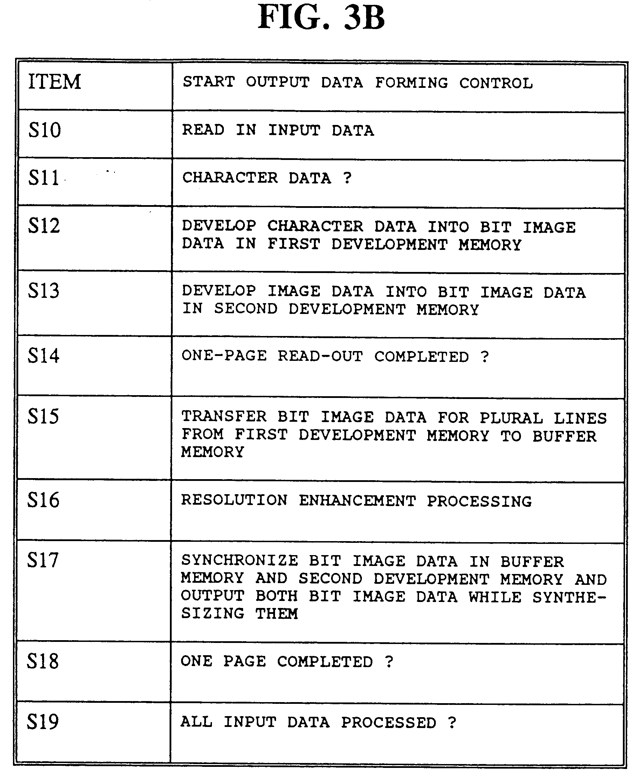

Next, an output data forming control routine which is executed in the video controller 11 of the laser printer LP will be described with reference to a flowchart of Fig. 3A.

The reception data buffer of the RAM 16 is successively stored with the input data transmitted from the external device 10 in accordance with the data receiving control program. Character data contains a header (header portion) containing indication information which specifies the character data as "character data" and indicates a range of the character data. Image data also contains a header (header portion) containing indication information which specifies the image data as "image data" and indicates a range of the image data. A reference numeral Si (i = 10, 11, 12, ...) in Fig. 3A designates each step.

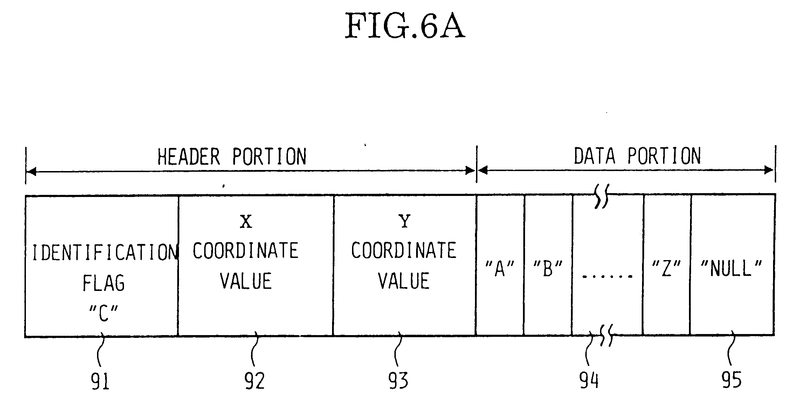

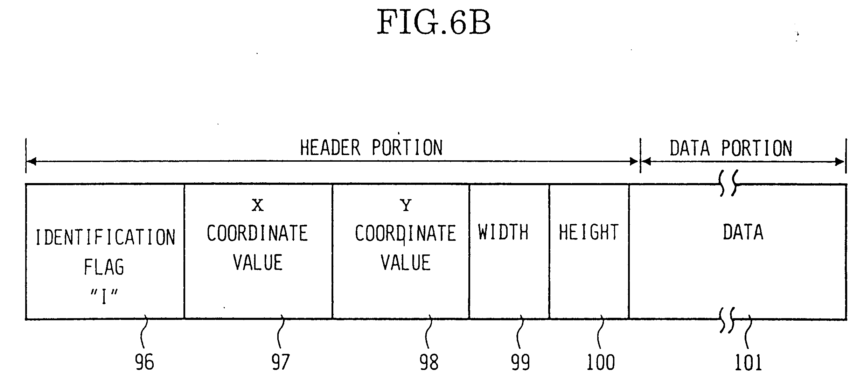

Each of input data (character data and image data) used in this embodiment is constructed in accordance with a format as shown in Figs. 6A and 6B.

As shown in Fig. 9A, the character data is constructed such that a data portion is subsequent to a header portion. The header portion includes an identification flag 91 and both of X-coordinate value 92 and Y-coordinate value 93 for indicating a print position of a character. In this case, the identification flag 91 is "C" which specifies "character data". Data 94 indicating characters to be printed is arranged in a print order in the data portion, and "NULL data" 95 is added at the end of the data portion. The data in the data portion contains data indicating both of a reference position with which the print position is determined, and the size of characters. Therefore, on the basis of the data of data portion indicating both of the reference position and the size of the characters and the data of the header portion indicating the print position, the range of the input character data when the character data is developed into bit image data can be determined.

As shown in Fig. 6B, the image data is also constructed such that a data portion is subsequent to a header portion. The header portion includes an identification flag 96, X-coordinate value 97 and Y-coordinate value 98 for indicating a print position of an image and size data which is used to indicate bit number width 99 and height 100 of the image to be printed. In this case, the identification flag 96 is "I" indicating "image data". Data 101 indicating the image to be printed is arranged in the data portion, and data indicating a reference position with which the print position is determined is provided in the data portion. Therefore, on the basis of the data of the data portion indicating the reference position and the data of the header portion indicating both of the print position and the size, the range of the input image data when developed into bit image data can be determined.

The format of the input data according to this invention is not limited to the format as shown in Figs. 6A and 6B, and any format may be applicable insofar as the input data of the format can be discriminated between character data and image data.

The output data forming control routine begins at the stage where the input data is stored in the reception data buffer. The input data is then read out of the reception data buffer at step S10. If the input data is judged to be character data on the basis of information of the header at a step S11 (judgment at the step S11 is "Yes"), the character data is stored in the first development memory while developed into bit image data at step S12. If the read-out operation for one page is uncompleted (judgment at a step S14 is "No"), the program returns to step S10. On the other hand, if the read-out input data is judged to be image data on the basis of the information of the header (the judgment at step S11 is "No"), the image data is stored in the second development memory while developed into bit image data at step S13. Here, when the bit image data of the character data is stored in the first development memory, "null data" is stored at each address of the second development memory which corresponds to each of addresses of the first development memory at which the bit image data of the character data is stored. Likewise, when the bit image data of the image data is stored in the second development memory, "null data" is stored at each address of the first development memory which corresponds to each of addresses of the second development memory at which the bit image data of the image data is stored. When the steps S10 to S14 are repeated to complete the read-out of input data for one page (the judgment at the step S14 is "Yes"), the bit image data of the amount corresponding to plural lines of the bit image data stored in the first development memory is transferred through the dual port RAM 17 to the buffer memory 21A of the resolution-enhancement processing circuit 21 at a step S15. The bit image data for the plural lines is repetitively subjected to the resolution enhancement processing for every window having predetermined shape, and then the bit image data which has been subjected to the resolution enhancement processing is stored in the buffer memory 21A again at step S16. The resolution enhancement processing is carried out by the hard logic, and step S16 is used to await the completion of the resolution enhancement processing by the hard logic.

Subsequently, the bit image data of the buffer memory 21A and the bit image data of the second development memory are synchronized with each other to form synthesized final bit image output data, and then the final bit image output data is successively output to the DC controller circuit 12 at step S17. In this case, since the bit image data stored in the first development memory is transferred through the dual port RAM 17 to the buffer memory 21A and is then subjected to the resolution enhancement processing, a processing time is required to complete this process. Therefore, the bit image data of the second development memory is subjected to the synthesizing process by being delayed to correspond to the processing time.

In order to ensure set up of the delay time, the bit image data of the second development memory is temporarily stored in the dual port RAM 34. Thereafter, the bit image data is output from the dual port RAM at a delayed timing, and is subjected to the synthesizing process with the bit image data output from the buffer memory 21A.

When the output operation of the bit image output data for one page is uncompleted (the judgment at the step S18 is "No"), the steps S15 to S18 are repeated. Upon completion of the output operation for one page (the judgment at the step S18 is "Yes"), the steps S10 to S19 are repeated to successively subject the input data to the resolution enhancement processing for every page if the input data exists in the reception buffer (the judgment at the step S19 is "No"), thereby successively subjecting the input data to the resolution enhancement processing for every page. When all of the input data has been completely subjected to the resolution enhancement processing (the judgment at the step S19 is "Yes"), the program finishes the control routine, and then returns to the main routine.

As described above, since the resolution enhancement processing is conducted only on the bit image data of the character data stored in the first development memory and is not conducted on the bit image data of the image data stored in the second development memory, the characters can be printed with enhanced resolution through the resolution enhancement processing, and the image which has been subjected to the gradation processing can be printed without altering its gradation to be originally represented, thus maintaining its image quality.

In the output data forming control steps S14 and S18, the judgment may be made regarding the input data for one line or for plural lines.

A second embodiment of the image output device according to this invention will be next described.

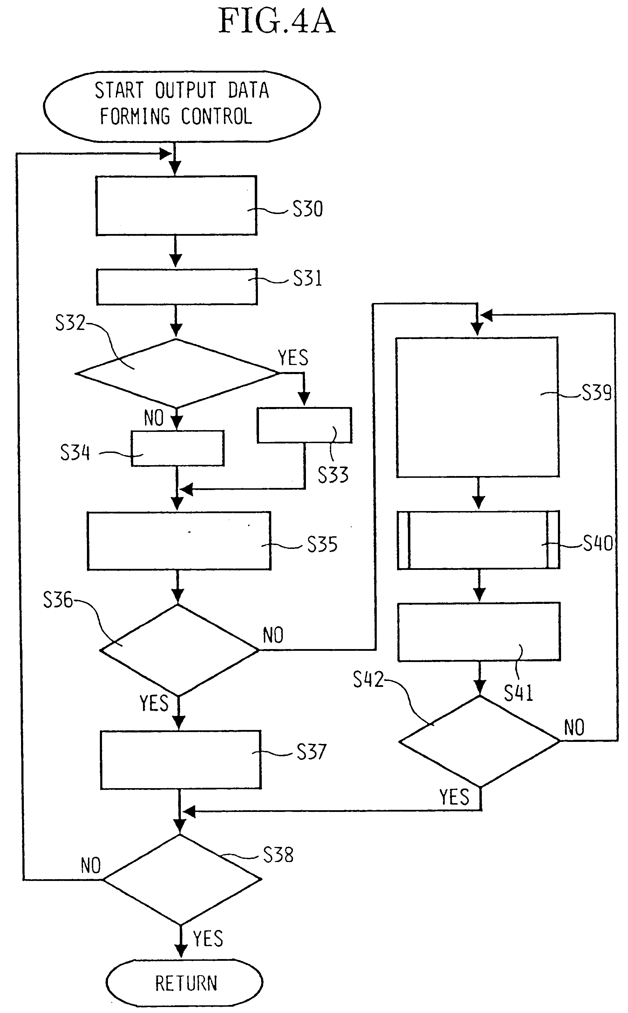

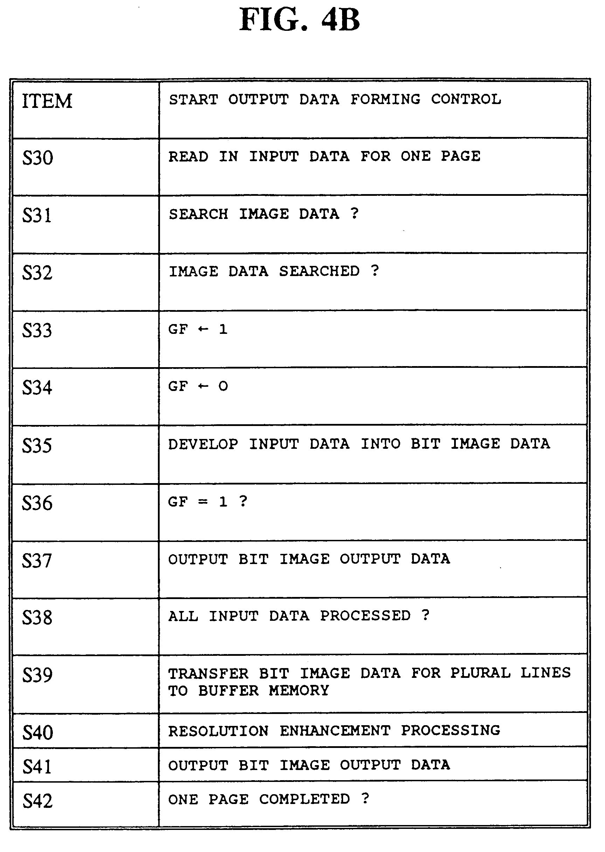

The output data forming control of the first embodiment may be altered to that of Fig. 4A in which the judgement as to whether the resolution enhancement processing should be executed is made for every page on the basis of input data for each page. In this case, similarly in the first embodiment, the RAM 16 is provided with only one bit data development memory for storing bit image data for one page, and the same processes as the first embodiment, except for the above output data forming control, are used.

That is, the control process is started at the stage where the input data is stored in the reception data buffer. First, the input data for one page is read out of the reception data buffer at step S30. It is then judged at step S31 whether the header of image data exists in the input data (the input data is searched to detect the header). If the header of the image data is detected at a step S32 (the judgment of the step S32 is "Yes"), the image flag GF is set (flag data is set to "1") at step S33. If the header is not detected (the judgment at the step S32 is "No"), the flag GF is reset (the flag data is set to "0") at step S34.

Subsequently, the input data for one page is developed into bit image data and stored in the bit data development memory at a step S35. If the flag is set (the judgment at the step S36 is "Yes"), the bit image data stored in the bit data development memory is successively output as final bit image output data to the DC controller circuit 12 and is not subjected to the resolution enhancement processing at step S37. If the input data exists in the reception buffer (the judgment at the step S38 is "No"), the steps S30 to S38 are repeated to successively output the bit image output data which has been formed for the input data for every page. If all the input data is completely subjected to the output operation (the judgment at a step S38 is "Yes"), the control process is finished, and the program returns to the main routine.

On the other hand, if the flag GF is reset, that is, if all the input data is character data (the judgment at the step S36 is "No"), bit image data for plural lines of the bit image data which is stored in the bit data development memory is transferred through the dual port RAM 17 to the buffer memory 21A of the resolution-enhancement processing circuit 21 at a step S39. Then, in the resolution-enhancement processing circuit 21, the bit image data for plural lines is repetitively subjected to the resolution enhancement processing for every window having predetermined shape. The bit image data thus processed is stored in the buffer memory 21A again at a step S40. Subsequently, the bit image data in the buffer memory 21A is successively output as final bit image output data to the DC controller circuit 12 at a step S41. Then, if the output operation of the bit image output data for one page is uncompleted (the judgment at the step S42 is "No"), the steps S39 to S42 are repeated. When the output operation for one page is completed (the judgment at the step S42 is "Yes") and if the input data exists in the reception buffer (the judgment at the step S38 is "No"), step 30 and the subsequent steps are repeated as described above.

As described above, when input data for each page includes no image data which is not required to be subjected to the resolution enhancement processing, the input data is not subjected to the resolution enhancement processing. Therefore, an image which has been subjected to the gradation processing can be printed without altering its gradation to be originally represented, so that the image quality of the image can be maintained. In addition, only characters can be printed with enhanced resolution through the resolution enhancement processing for every page.

In this embodiment, it is not required to synthesize bit pattern data which has been subjected to the resolution enhancement processing and bit pattern data which has not been subjected to the resolution enhancement processing, so that the synchronizing operation of synchronizing the output timings of both bit pattern data can be eliminated.

At the steps S30 and S42, the data unit to be subjected to the data processing may be data for one line or for plural lines.

Next, a third embodiment of the image output device according to this invention will be described.

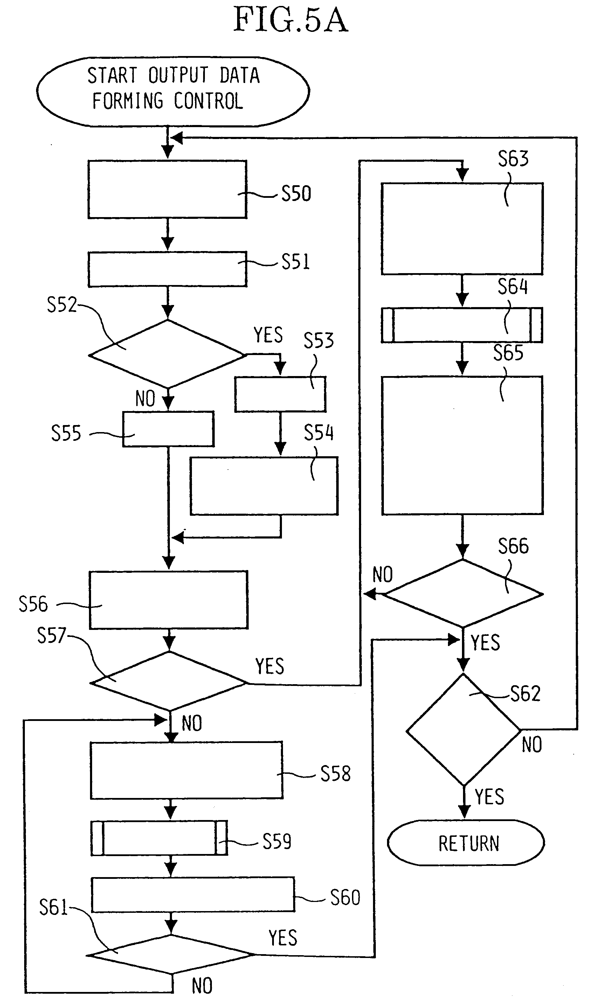

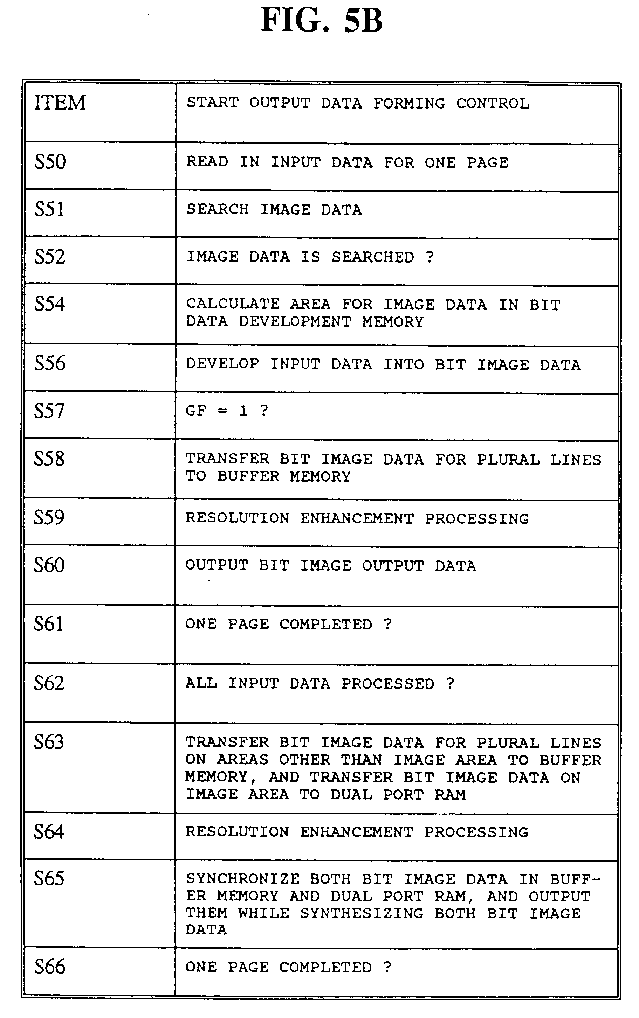

The output data forming control process of the first embodiment may be altered to that of Fig. 5A, in which image data is not subjected to the resolution enhancement processing when the input data for each page includes the image data. In this case, similarly as in the first embodiment, the RAM 16 is provided with only one bit data development memory for storing bit image data for one page, and the same processes as in the first embodiment, except for the above output data forming control, are used.

Steps S50 to S53 and step S55 of this embodiment are identical to the steps S30 to S34 for the output data forming control of the second embodiment, and thus the description thereof is eliminated. Step S54 and the subsequent steps to step S54 will be described hereunder. That is, when image data is detected, the flag GF is set at step S53. On the basis of an indication information of the header of the image data, a storing area for the image data in the bit data development memory is calculated, and an image area is obtained on the basis of plural addresses on the bit data development memory at step S54.

Subsequently, input data for one page is developed into bit image data and is stored in the bit data development memory at step S56. When the flag GF is not set, that is, all the input data is character data (the judgment at step S57 is "No"), bit image data for plural lines of the bit image data stored in the bit data development memory is transferred through the dual port RAM 17 to the buffer memory 21A of the resolution-enhancement processing circuit 21 at step S58. The resolution enhancement processing is then repetitively conducted on the bit image data for plural lines in the resolution-enhancement processing circuit 21 at step S59 in the manner as described above. Subsequently, the bit image data of the buffer memory 21A is successively output as final bit image output data to the DC controller circuit 12 at a step S60. If the output operation of the bit image output data for one page is uncompleted (the judgment at step S61 is "No"), the steps S58 to S61 are repeated. When the output operation for one page is completed (the judgment at step S61 is "Yes") and if the input data exists in the reception buffer (the judgment at step S62 is "No"), step S50 and the steps subsequent to step S50 are repeated as described above.

On the other hand, if the flag GF is set (the judgment at step S57 is "Yes"), on the basis of data indicating the image area which is determined at the step S54, bit image data on areas other than the image area, of the bit image data stored in the bit data development memory, is transferred to the buffer memory 21A, and the bit image data on the image area is transferred to the dual port RAM 34 at a step S63. As described above, the resolution enhancement processing is repetitively conducted on the bit image data on the areas other than the image area at a step S64. Thereafter, the bit image data output from the buffer memory 21A and the bit image data output from the bit data development memory are synchronized with each other, and final bit image output data is formed while synthesizing both bit image data. The bit image output data is successively output to the DC controller circuit 12 at a step S65. Similarly as in the first embodiment, a timing at which the bit image data on the image area is output from the dual port RAM 34 is delayed by a delay time required for a data output operation which occurs in the resolution enhancement processing for the bit image data on the areas other than the image area. This delay time enables the synthesis between the bit image data on the image area and the bit image data on the areas other than the image area, which have been subjected to the resolution enhancement processing. If the output operation of the bit image output data for one page is uncompleted (the judgment at step S66 is "No"), the steps S63 to S66 are repeated. When the output operation for one page is completed (the judgment at step S66 is "Yes") and if the input data exists in the reception buffer (the judgment at step S62 is "No"), steps S62 and subsequent steps are repeated.

As described above, on the basis of the data on the image area obtained by plural addresses on the bit data development memory, no resolution enhancement processing is conducted on the bit image data of the image data while it is conducted on the bit image data of the character data, so that characters can be printed with enhanced resolution through the resolution enhancement processing, and an image which has been subjected to the gradation processing can be printed without altering its gradation as originally represented, thus maintaining its image quality.

This invention is applicable to various image printing apparatuses such as a dot printer, an inject printer and so on which are equipped with various resolution-enhancement processing circuits, and further is applicable to various image display devices which are equipped with a display unit such as a liquid crystal display or a CRT, and various resolution-enhancement processing circuits, and serve to display characters and images on the basis of dot data.

## Claims

1. An image output device comprising:
interface means (19) for receiving input data comprising character data and image data from an external device (100);
data converting means (17) for converting the input data received by the interface means (19) into bit data;
resolution enhancement processing means for subjecting bit data to resolution enhancement processing;
output means (20) for receiving bit data and for outputting said received bit data to an output medium (12);
data group judging and separating means (13) for receiving the input data from the interface means and, on the basis of header data in the input data, separating said input data into two groups, one of which is character data to be subjected to the resolution enhancement processing, and the other of which is image data and is not to be subjected to resolution enhancement processing;
first (16A) and second (16B) storing means for respectively storing bit data of the character data group on an output unit basis and for storing bit data of image data group, and
data synthesizing means (34) for synthesizing first bit data obtained by subjecting the bit data from the first storing means (16A) to the resolution enhancement processing in the resolution-enhancement processing means (21) and second bit data from the second storing means (16B) in synchronism with each other, and outputting the synthesized data as bit data to the output means (20).

2. The image output device according to claim 1, wherein said data synthesizing means (34) delays the bit data stored in said second storing means (16B) to correspond to a processing time required for said resolution-enhancement processing means (21) to subject bit data to resolution enhancement processing.

3. The image output device according to claim 1 or 2, wherein said output-unit basis is data for at least one line of input data.

4. An image output device comprising:
interface means (19) for receiving input data comprising character data and image data from an external device (100);
data converting means (17) for converting the input data received by the interface means (19) into bit data;
resolution enhancement processing means for subjecting bit data to resolution enhancement processing;
output means (20) for receiving bit data and for outputting said received bit data to an output medium (12);
determining means for setting an image flag (GF) if a header indicating image data is detected in an output unit of received input data storing means for storing a said output unit of bit image data generated from converted input data; and
means for transferring one said output unit of bit data as final output data if the flag is set and for transferring one said output unit of the bit data via the resolution enhancement processing means to the output means if the flag is not set.

5. An image output device comprising:
interface means (19) for receiving input data comprising character data and image data from an external device (100);
data converting means (17) for converting the input data received by the interface means (19) into bit data;
resolution enhancement processing means for subjecting bit data to resolution enhancement processing;
output means (20) for receiving bit data and for outputting said received bit data to an output medium (12);
determining means for setting an image flag and determining an image area if a header of image data is detected in an output unit of received input data storing means for storing said output unit of bit data converted from the input data; and means for transferring one output unit of the bit data via the resolution enhancement processing means to the output means if the flag is not set, and
for transferring bit data in determined image areas as final output data and bit data of other areas via the resolution enhancement means to the output means if the flag is set.

6. The image output device according to claim 5, wherein said data transferring means (34) includes synthesizing means (34) for synthesizing said bit data corresponding to said resolution enhancement processed bit data and non-enhanced bit data, said synthesizing means outputting said synthesized data to said output means (12).

7. The image output device according to claim 6, wherein said synthesizing means (34) delays said bit data corresponding to said non-enhanced by data to correspond to a processing time required for said resolution-enhancement processing means to subject bit data to resolution enhancement processing.

8. The image output device according to claim 1, 4 or 5 wherein said output unit comprises data for one page of input data.

9. A laser printer comprising an image output device according to any one of the preceding claims.

## Patentansprüche

1. Bildausgabevorrichtung mit:
einem Schnittstellenmittel (19) zum Empfangen von Eingangsdaten, die Zeichendaten und Bilddaten enthalten, von einer externen Vorrichtung (100);
einem Datenumwandlungsmittel (17) zum Umwandeln der von dem Schnittstellenmittel (19) empfangenen Eingangsdaten in Bitdaten;
einem Auflösungserhöhungsverarbeitungsmittel zum Unterwerfen der Bitdaten einer Auflösungserhöhungsverarbeitung;
einem Ausgabemittel (20) zum Empfangen von Bitdaten und zum Ausgeben der empfangenen Bitdaten an ein Ausgabemedium (12);
einem Datengruppenbeurteilungs- und -trennmittel (13) zum Empfangen der Eingangsdaten von dem Schnittstellenmittel und auf der Grundlage der Kopfdaten in den Eingangsdaten zum Trennen der Eingangsdaten in zwei Gruppen, von denen eine die Zeichendaten sind, die der Auflösungserhöhungsverarbeitung zu unterwerfen sind, und von denen die andere die Bilddaten sind und die nicht der Auflösungserhöhungsverarbeitung zu unterwerfen sind;
einem ersten (16A) und einem zweiten (16B) Speichermittel zum entsprechenden Speichern von Bitdaten der Zeichendatengruppe auf einer Ausgabeeinheitenbasis und zum Speichern von Bitdaten der Bilddatengruppe; und
einem Datensynthetisierungsmittel (34) zum Synthetisieren erster Bitdaten, die durch Unterwerfen der Bitdaten von dem ersten Speichermittel (16A) der Auflösungserhöhungsverarbeitung in dem Auflösungserhöhungsverarbeitungsmittel (21) erhalten sind, und zweiter Bitdaten von dem zweiten Speichermittel (16B) synchron zueinander und Ausgeben der synthetisierten Daten an das Ausgabemittel (20).

2. Bildausgabevorrichtung nach Anspruch 1,
bei der das Datensynthetisierungsmittel (34) die in dem zweiten Speichermittel (16B) gespeicherten Bitdaten verzögert, so daß sie einer Verarbeitungszeit entsprechen, die für das Auflösungserhöhungsverarbeitungsmittel (21) zum Unterwerfen der Bilddaten der Auflösungserhöhungsverarbeitung notwendig ist.

3. Bildausgabevorrichtung nach Anspruch 1 oder 2, bei der die Ausgabeeinheitenbasis Daten für mindestens eine Li
nie von Eingangsdaten ist.

4. Bildausgabevorrichtung mit:
einem Schnittstellenmittel (19) zum Empfangen von Eingangsdaten, die Zeichendaten und Bilddaten enthalten, von einer externen Vorrichtung (100);
einem Datenumwandlungsmittel (17) zum Umwandeln der von dem Schnittstellenmittel (19) empfangenen Eingangsdaten in Bitdaten; einem Auflösungserhöhungsverarbeitungsmittel zum Unterwerfen von Bitdaten einer Auflösungserhöhungsverarbeitung;
einem Ausgabemittel (20) zum Empfangen von Bitdaten und zum Ausgeben der empfangenen Bitdaten an ein Ausgabemedium (12);
einem Bestimmungsmittel zum Setzen eines Bildflag (GF), wenn ein Kopf anzeigt, daß Bilddaten in einer Ausgabeeinheit von empfangenen Eingangsdaten erfaßt sind;
einem Speichermittel zum Speichern der Ausgabeeinheit von Bitdaten, die aus umgewandelten Eingangsdaten erzeugt sind; und
einem Mittel zum Übertragen einer Ausgabeeinheit von Bitdaten als endgültige Ausgabedaten, wenn das Flag gesetzt ist und zum Übertragen einer Ausgabeeinheit der Bitdaten über das Auflösungserhöhungsverarbeitungsmittel zu dem Ausgabemittel, wenn das Flag nicht gesetzt ist.

5. Bildausgabevorrichtung mit:
einem Schnittstellenmittel (19) zum Empfangen von Eingangsdaten, die Zeichendaten und Bilddaten enthalten, von einer externen Vorrichtung (100);
einem Datenumwandlungsmittel (17) zum Umwandeln der von dem Schnittstellenmittel (19) empfangenen Eingangsdaten in Bitdaten;
einem Auflösungserhöhungsverarbeitungsmittel zum Unterwerfen von Bitdaten einer Auflösungserhöhungsverarbeitung;
einem Ausgabemittel (20) zum Empfangen von Bitdaten und zum Ausgeben der empfangenen Bitdaten an ein Ausgabemedium (12);
einem Bestimmungsmittel zum Setzen eines Bildflag und Bestimmen eines Bildgebietes, wenn ein Kopf von Bilddaten in einer Ausgabeeinheit von empfangenen Eingangsdaten erfaßt ist;
einem Speichermittel zum Speichern der Ausgabeeinheit von Bitdaten, die aus den Eingangsdaten umgewandelt sind; und
einem Mittel zum Übertragen der Ausgabeeinheit der Bitdaten über das Auflösungserhöhungsverarbeitungsmittel zu dem Ausgabemittel, wenn das Flag nicht gesetzt ist, und zum Übertragen von Bitdaten in bestimmten Bildgebieten als endgültige Ausgabedaten und Bitdaten anderer Gebiete über das Auflösungserhöhungsmittel zu dem Ausgabemittel, wenn das Flag gesetzt ist.

6. Bildausgabevorrichtung nach Anspruch 4 oder 5,
bei der das Datenübertragungsmittel (34) ein Synthetisierungsmittel (34) zum Synthetisieren der Bitdaten aufweist, die den Auflösungserhöhungsverarbeitenden Bitdaten und nicht erhöhten Bitdaten entsprechen, wobei das Synthetisierungsmittel die synthetisierten Daten an das Ausgabemittel (12) ausgibt.

7. Bildausgabevorrichtung nach Anspruch 6, bei der das Synthetisierungsmittel (34) die Bitdaten entsprechend den nicht erhöhten Bitdaten verzögert, so daß sie einer Verarbeitungszeit für das Auflösungserhöhungsverarbeitungsmittel zum Unterwerfen der Bitdaten einer Auflösungserhöhungsverarbeitung entsprechen.

8. Bildausgabevorrichtung nach Anspruch 1, 4, oder 5,
bei der die Ausgabeeinheit Daten für eine Seite von Eingangsdaten aufweist.

9. Laserdrucker mit einer Bildausgabevorrichtung nach einem der vorangehenden Ansprüche.

## Revendications

1. Dispositif de reproduction d'image comprenant :
un moyen d'interface (19) destiné à recevoir des données d'entrée comprenant des données de caractères et des données d'images provenant d'un dispositif externe (100),
un moyen de conversion de données (17) destiné à convertir les données d'entrée reçues par le moyen d'interface (19) en données binaires,
un moyen de traitement d'amélioration de la résolution destiné à soumettre les données binaires à un traitement d'amélioration de la résolution,
un moyen de sortie (20) destiné à recevoir les données binaires et à fournir en sortie lesdites données binaires reçues à un support de reproduction (12),
un moyen d'évaluation et de séparation de groupes de données (13) destiné à recevoir les données d'entrée provenant du moyen d'interface et, sur la base de données d'en-tête dans les données d'entrée, séparer lesdites données d'entrée en deux groupes, dont l'un est constitué de données de caractères devant être soumises au traitement d'amélioration de la résolution, et dont l'autre est constitué de données d'images ne devant pas être soumises au traitement d'amélioration de la résolution,
des premiers (16A) et second (16B) moyens de mémorisation destinés à mémoriser respectivement les données binaires du groupe de données de caractères sur une base d'unités de sortie et destinés à mémoriser les données binaires du groupe de données d'images, et
un moyen de synthèse de données (34) destiné à synthétiser des premières données binaires obtenues en soumettant les données binaires provenant du premier moyen de mémorisation (16A) au traitement d'amélioration de la résolution dans le moyen de traitement d'amélioration de la résolution (21) et des secondes données binaires provenant du second moyen de mémorisation (16B) en synchronisme les unes avec les autres, et fournir en sortie les données synthétisées sous forme de données binaires au moyen de sortie (20).

2. Dispositif de reproduction d'image selon la revendication 1, dans lequel ledit moyen de synthèse de données (34) retarde les données binaires mémorisées dans ledit second moyen de mémorisation (16B) pour correspondre à un temps de traitement nécessaire pour que ledit moyen de traitement d'amélioration de la résolution (21) soumette les données binaires au traitement d'amélioration de la résolution.

3. Dispositif de reproduction d'image selon la revendication 1 ou 2, dans lequel ladite base d'unités de sortie est constituée de données pour au moins une ligne des données d'entrée.

4. Dispositif de reproduction d'image comprenant :
un moyen d'interface (19) destiné à recevoir des données d'entrée comprenant des données de caractères et des données d'images provenant d'un dispositif externe (100),
un moyen de conversion de données (17) destiné à convertir les données d'entrée reçues par le moyen d'interface (19) en données binaires,
un moyen de traitement d'amélioration de la résolution destiné à soumettre des données binaires à un traitement d'amélioration de la résolution,
un moyen de sortie (20) destiné à recevoir les données binaires et à fournir en sortie lesdites données binaires reçues à un support de reproduction (12),
un moyen de détermination destiné à armer un indicateur d'image (GF) si des données d'images indiquant un en-tête sont détectées dans une unité de sortie de données d'entrée reçues,
un moyen de mémorisation destiné à mémoriser une dite unité de sortie de données binaires générées à partir de données d'entrée converties, et
un moyen destiné à transférer une dite unité de sortie de données binaires sous forme de données de sortie finales si l'indicateur est armé et destiné à transférer une dite unité de sortie des données binaires par l'intermédiaire du moyen de traitement d'amélioration de la résolution vers le moyen de sortie si l'indicateur n'est pas armé.

5. Dispositif de reproduction d'image comprenant :
un moyen d'interface (19) destiné à recevoir des données d'entrée comprenant des données de caractères et des données d'images provenant d'un dispositif externe (100),
un moyen de conversion de données (17) destiné à convertir les données d'entrée reçues par le moyen d'interface (19) en données binaires,
un moyen de traitement d'amélioration de la résolution destiné à soumettre des données binaires à un traitement d'amélioration de la résolution,
un moyen de sortie (20) destiné à recevoir les données binaires et à fournir en sortie lesdites données binaires reçues à un support de reproduction (12),
un moyen de détermination destiné à armer un indicateur d'image et à déterminer une zone d'image si un en-tête de données d'images est détecté dans une unité de sortie de données d'entrée reçues,
un moyen de mémorisation destiné à mémoriser ladite unité de sortie de données binaires converties à partir des données d'entrée, et
un moyen destiné à transférer une unité de sortie des données binaires par l'intermédiaire du moyen de traitement d'amélioration de la résolution vers le moyen de sortie si l'indicateur n'est pas armé, et destiné à transférer des données binaires dans des zones d'images déterminées sous forme de données de sortie finales et des données binaires des autres zones par l'intermédiaire du moyen d'amélioration de la résolution vers le moyen de sortie si l'indicateur est armé.

6. Dispositif de reproduction d'image selon la revendication 5, dans lequel ledit moyen de transfert des données (34) comprend un moyen de synthèse (34) destiné à synthétiser lesdites données binaires correspondant auxdites données binaires traitées en vue de l'amélioration de la résolution et auxdites données non améliorées, ledit moyen de synthèse fournissant en sortie lesdites données synthétisées audit moyen de sortie (12).

7. Dispositif de reproduction d'image selon la revendication 6, dans lequel ledit moyen de synthèse (34) retarde lesdites données binaires correspondant auxdites données binaires non améliorées pour correspondre à un temps de traitement nécessaire pour que ledit moyen de traitement d'amélioration de la résolution soumette des données binaires au traitement d'amélioration de la résolution.

8. Dispositif de reproduction d'image selon la revendication 4 ou 5, dans lequel ladite unité de sortie comprend des données pour une page de données d'entrée.

9. Imprimante à laser comprenant un dispositif de reproduction d'image selon l'une quelconque des revendications précédentes.
